# EUROPÄISCHE PATENTSCHRIFT

(11) **EP 0 498 058 B1**
(45) Veröffentlichungstag und Bekanntmachung des Hinweises auf die Patenterteilung: **04.09.1996**
(21) Anmeldenummer: 91120818.9
(22) Anmeldetag: 04.12.1991
(51) Int. Cl.: H02G 3/04, F16B 11/00, F16B 7/00

(54) **Führungsgestell für elektrische Leitungen**
Guiding frame for electrical conductors
Bâti de guidage pour conducteurs électriques

(30) Priorität: 02.02.1991 DE 4103237
(43) Veröffentlichungstag der Anmeldung: 12.08.1992
(73) Patentinhaber: Daimler-Benz Aerospace Airbus Gesellschaft mit beschränkter Haftung, D-21129 Hamburg (DE)
(72) Erfinder: Guthke, Hans-Peter, W-2162 Steinkirchen (DE); Piede, Werner, W-2155 Jork (DE)
(74) Vertreter: Hansmann, Dierk, Dipl.-Ing.

(56) Entgegenhaltungen:
- EP-A- 0 016 257
- EP-A- 0 194 020
- FR-A- 2 606 124

## Beschreibung

Die Erfindung bezieht sich auf ein Führungsgestell nach dem Oberbegriff des Anspruchs 1.

Derartige Führungsgestelle dienen dazu, in einem Flugzeug auf bestimmten Routen verlegte elektrische Leitungen abzustützen und in angemessenem Abstand zu den Leitungen anderer Routen zu halten, um elektromagnetische Störeinwirkungen und Arc-Tracking zu vermeiden. Arc-Tracking tritt durch Einwirkung von Feuchtigkeit auf, wenn die Isolierung beispielsweise einer Spannung führenden Leitung beschädigt ist und besteht darin, daß ein Kriechstrom zu einer anderen beschädigten Leitung mit entsprechender Potentialdifferenz oder zur Massepotential führenden Struktur entsteht. Bisherige Führungsgestelle dieser Art werden als aus Aluminiumrohren zusammengeschweißt. Die mit der Struktur verbindbaren Rohrelementenden sind jeweils durch eine Einlage verstärkt, flach gedrückt und mit Bohrungen versehen. Zur Erzielung eines wirksamen Oberflächenschutzes wird das Metallgestell einer Chromsäureanodisierung und einem Wirbelsinterprozeß zum Auftragen einer Kunststoffschicht unterzogen. Die Rohrelementenden erhalten zusätzlich eine Epoxidharzbeschichtung.

Hierbei ist von Nachteil, daß die Herstellkosten eines derartigen Führungsgestells insbesondere infolge der aufwendigen Schweißtechnik und der verschiedenen Maßnahmen zur Herstellung des Oberflächenschutzes recht hoch sind. Ein weiterer Nachteil der beschriebenen Führungsgestelle besteht darin, daß diese unter Umständen am Entstehen von Arc-Tracking beteiligt sind.

Zur Herstellung von Rohrrahmengestellen ist es allgemein bekannt, die betreffenden Rohre durch Verbindungsformteile in Form von Eckverbindern miteinander zu verbinden, die in die Rohrenden einschiebbare Zapfen aufweisen, die durch Kleben oder Löten mit diesen verbunden werden. Eine derartige Lösung ist beispielsweise der EP-A-00 16 257 zu entnehmen. Diese zeigt einen Verbinder für Rohrrahmengestelle, die Geräte aufnehmen sollen. Hierbei ist erwähnt, daß der Verbinder sowohl aus Metall als auch aus Kunststoff bestehen kann. Hinweise auf eine zweckmäßige Gestaltung der Verbindung, wenn der Kunststoff, beispielsweise Polyetheretherketon, unzureichende Klebeigenschaften aufweist, sind diesem Dokument nicht zu entnehmen.

Demgemäß liegt der Erfindung die Aufgabe zugrunde, ein gattungsgemäßes Führungsgestell derart auszubilden, daß die Schweißverbindungen und die genannten Korrosions-Schutzschichten entfallen, wobei zugleich eine höhere Sicherheit gegen Arc-Tracking erreicht wird.

Diese Aufgabe wird bei einem gattungsgemäßen Führungsgestell durch die kennzeichnenden Merkmale des Patentanspruchs 1 gelöst.

Dabei ist insbesondere von Vorteil, daß nicht nur Gewichtsvorteile erzielt werden, sondern auch niedrigere Herstellkosten, die sich unter anderem durch den Wegfall einer aufwendigen Vorbehandlung zur Klebung ergeben. Weiterhin ist dabei vorteilhaft, daß das Auftreten von Arc-Tracking reduziert wird.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Ansicht eines Führungsgestells,
- Fig. 2: die Ansicht II nach Fig. 1,
- Fig. 3: die Ansicht III nach Fig. 1,
- Fig. 4: ein T-Element,
- Fig. 5: die Ansicht V nach Fig. 4,
- Fig. 6: eine Anschlußbrücke,
- Fig. 7: die Ansicht VII nach Fig. 6,
- Fig. 8: die Ansicht VIII nach Fig. 6,
- Fig. 9: einen Augenkopf,
- Fig. 10: die Ansicht X nach Fig. 9,
- Fig. 11: einen Anschlußzapfen,
- Fig. 12: die Ansicht XII nach Fig. 11,
- Fig. 13: den Schnitt XIII nach Fig. 11 und
- Fig. 14: die Einzelheit XIV nach Fig. 13.

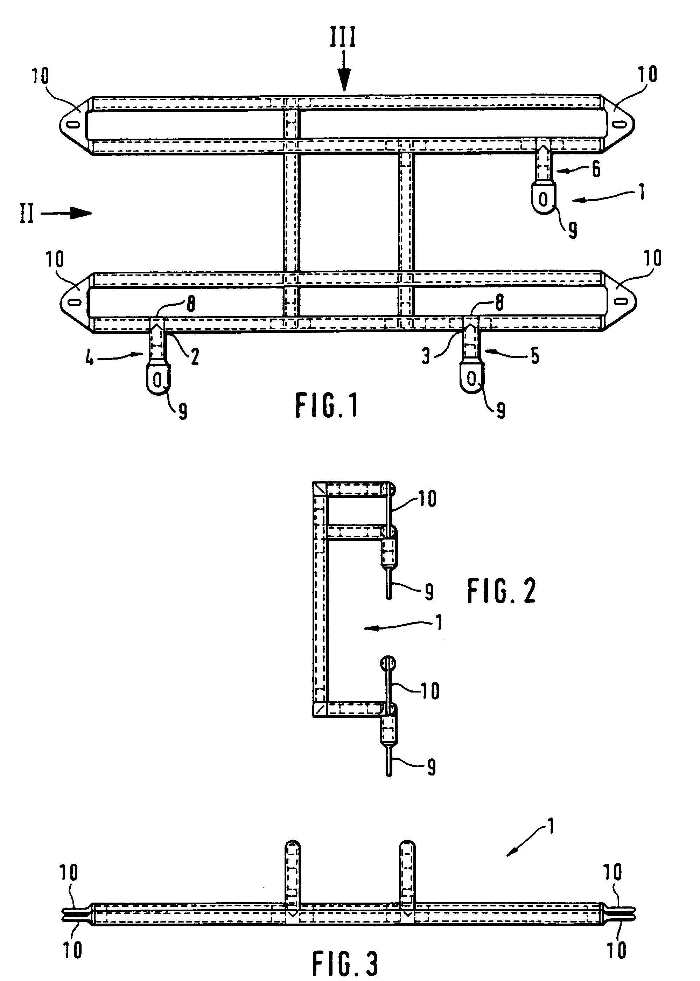

Die Figuren 1 bis 3 zeigen beispielhaft ein Führungsgestell 1, bestehend aus einzelnen nicht näher bezeichneten Rohrelementen von identischem Querschnitt, die durch unterschiedliche Verbindungsformteile miteinander verbunden sind. Die Verbindungsformteile können beispielsweise als T-Elemente 8, Augenköpfe 9, Anschlußbrücken 10 oder dergleichen ausgebildet sein. Das Führungsgestell 1 weist an den Stellen 2 und 3 je ein T-Element 8 von identischen Abmessungen auf. Zur Befestigung des Führungsgestells 1 an der Flugzeugstruktur sind weiterhin an den Stellen 4 bis 6 Verbindungsformteile in Gestalt von drei Augenköpfen 9 vorgesehen. Jeweils zwei der in Fig.1 waagerechten Rohrelemente sind an ihren Enden durch Anschlußbrücken 10 miteinander verbunden, die jeweils einen Punkt zum Befestigen des Führungsgestells 1 an der hier nicht gezeigten Struktur bilden. Die Rohrelemente und Verbindungsformteile bestehen aus Polyetheretherketon (PEEK), einem Thermoplasten von hoher Festigkeit und Temperaturbeständigkeit, dem zur weiteren Steigerung der Festigkeit Glasfasern zugesetzt werden können.

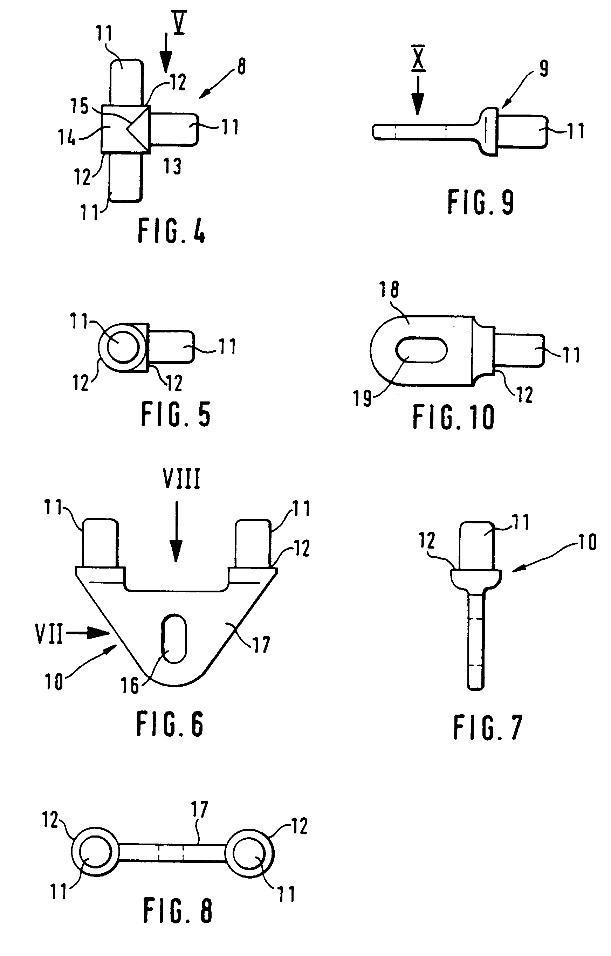

Die Figuren 4 und 5 zeigen ein T-Element 8 mit den drei Anschlußzapfen 11. Diese sind an den Innendurchmesser der Rohrelemente so angepaßt, daß sich eine Klebefuge von vorbestimmter Dicke ergibt. Jeder Anschlußzapfen 11 endet in einer Schulter 12, deren Außendurchmesser mit dem der Rohrelemente übereinstimmt. Die Schultern 12 gehen jeweils in eine zum betreffenden Anschlußzapfen 11 koaxiale zylindrische Außenfläche 13 bzw. 14 über. Die Außenflächen 13 und 14 bilden die Durchdringung 15 und bewirken einen glatten Übergang zu den Außenflächen der Rohrelemente.

Die Figuren 6 bis 8 zeigen eine Anschlußbrücke 10 mit zwei Anschlußzapfen 11 und einem Brückenteil 17. Die parallel ausgerichteten Anschlußzapfen 11 sind über das Brückenteil 17 miteinander verbunden, das zur Bildung einer Anschlußmöglichkeit zur Struktur hin mit einem Langloch 16 versehen ist.

Die Figuren 9 und 10 zeigen einen Augenkopf 9, im wesentlichen bestehend aus einem Anschlußzapfen 11, woran eine Zunge 18 mit einem Langloch 19 angeformt ist.

Zur Bildung eines Führungsgestells 1 können weitere hier nicht gezeigte Verbindungsformteile wie Winkelteile, Bogenteile oder dergleichen vorgesehen sein. Das Führungsgestell 1 kann je nach Einbaufall ganz unterschiedliche Konfigurationen aufweisen, die jedoch alle aus Rohrelementen und Verbindungsformteilen der vorgenannten Art zusammengestellt werden, wobei die Anschlußzapfen 11 jeweils formschlüssig in die Rohrelemente einzukleben sind. Die genannten Verbindungsformteile sind vorteilhaft im Spritzgießverfahren hergestellt.

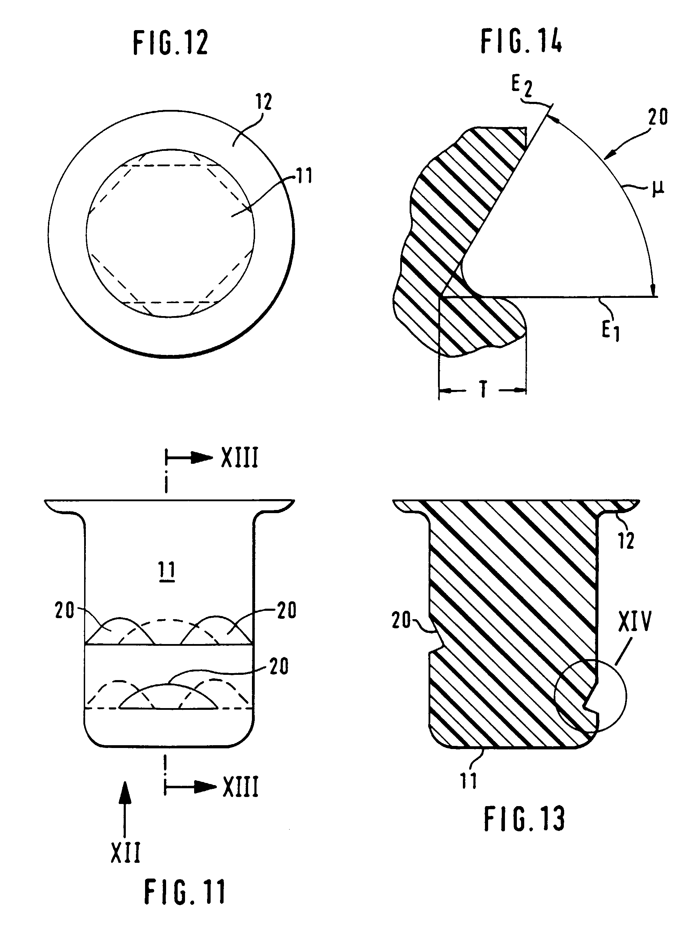

Die Figuren 11 bis 13 zeigen eine vergrößerte Darstellung eines Anschlußzapfens 11. Dieser weist auf seiner Außenfläche sechs keilförmige Taschen 20 auf. Zwei der Taschen 20 erscheinen in Fig. 13, wobei die für die Keilform maßgeblichen Winkel in wahrer Größe abgebildet sind. Gemäß Fig. 14 wird die Form der Tasche 20 durch zwei Ebenen E1 und E2 bestimmt, die sich innerhalb des Anschlußzapfens 11 in einer vorbestimmten von der Umrißmantellinie aus gemessenen Tiefe T treffen. Die dem freien Ende des Anschlußzapfens 11 zugewandte Ebene E1 steht auf dessen Achse annähernd senkrecht, wobei beide Ebenen E1,E2 miteinander einen Öffnungswinkel µ von 60° bilden. Zur Reduzierung der Kerbwirkung ist die Schnittkante beider Ebenen E1,E2 durch eine Hohlkehle von angemessenem Krümmungsradius entschärft. Eine bekannte Maßnahme, um Polyetheretherketon für eine Adhäsionsklebung, also für eine übliche Klebung, vorzubehandeln besteht darin, daß dieses Material an den zu verklebenden Flächen vor Auftragen des Klebstoffs durch Anwendung von Koronaentladungen zu oxidieren ist. Eine andere Art der Vorbereitung von PEEK zum Kleben besteht darin, daß die betreffenden Teile einer Behandlung mit Schwefelsäure unterzogen werden. Weiterhin ist bei derartigen Klebungen darauf zu achten, daß die Klebstoffschicht von nur sehr geringer Dicke ist. Um dies zu erreichen, sind oft besondere Arbeitsgänge zur gegenseitigen Anpassung der Oberflächen, etwa Glätten durch Nacharbeiten, erforderlich. Die genannten Verfahren zum Vorbehandeln und Glätten der Klebeteile sind wegen des damit verbundenen relativ großen Aufwandes recht kostenintensiv. Zur Umgehung dieser aufwendigen Verfahrensschritte sind die Anschlußzapfen 11 mit den besagten Taschen 20 versehen. Hierdurch wird anstelle einer Haftung durch Adhäsion eine Haftung durch Formschluß bewirkt. Seitens der Rohrelemente ergibt sich eine Maßnahme zur Sicherstellung des Formschlusses in überraschend einfacher Weise dadurch, daß deren Innenfläche, bedingt durch das betreffende Herstellungsverfahren, bereits eine Wellenform aufweist. Beim Auftragen des Klebstoffs ist darauf zu achten, daß die Taschen 20 satt damit gefüllt werden. Der Zusammenbau eines Führungsgestells 1 geschieht in einer Klebevorrichtung. Dies ist praktisch eine Montagelehre, in der die Rohrelemente und Verbindungsformteile nach dem Zusammenfügen bis zum Aushärten des Klebstoffs in der richtigen Position fixiert werden. Als Klebstoff kann Hysol EA 934 NA A+B, ein Reaktionsklebstoff auf Epoxid-Basis, verwendet werden. Nach dem Zusammenfügen wird die Vorrichtung mit dem Führungsgestell 1 in einen Trockenofen verbracht, wo die Aushärtung des Klebstoffs durch Aufheizen auf 50 °C für die Dauer von ca. 150 Minuten erfolgt. Der Nachweis der geforderten Festigkeit der Klebverbindung wurde in Zugversuchen an entsprechenden Proben ermittelt. Dabei zeigte sich eine weitere überraschend günstige Wirkung darin, daß infolge eines vorteilhaften Fließverhaltens des Klebstoffs eine Keilwirkung eintritt, die einem Herausziehen eines Anschlußzapfens 11 aus einem Rohrelement entgegenwirkt. Diese Wirkung resultiert aus der Keilform der Klebstofftaschen und ist bei Verwendung des genannten Klebstoffs am günstigsten, wenn die Klebefuge eine Dicke von 0,025 bis 0,35 mm aufweist. Zur Steigerung der Festigkeit des besagten Thermoplasten liefert eine Beimengung von 30% Glasfasern, bezogen auf das Gewicht, gute Ergebnisse.

Bei dem erfindungsgemäßen Führungsgestell ist von Vorteil, daß nicht nur Gewichtsvorteile erzielt werden, sondern auch niedrigere Herstellkosten, die sich unter anderem durch den Wegfall einer aufwendigen Vorbehandlung zur Klebung ergeben.

## Patentansprüche

1. Führungsgestell (1) für elektrische Leitungen für Flugzeuge, bestehend aus einzelnen an vorbestimmten Stellen miteinander verbundenen Rohren, wobei freie Enden der Rohre mit der Struktur des Flugzeuges verbindbar sind und das Führungsgestell (1) aus Rohrelementen und Verbindungsformteilen (8,9,10) zur Befestigung an der Struktur des Flugzeuges oder von Rohrelementen untereinander besteht, dadurch **gekennzeichnet**, daß die Verbindungsformteile (8,9,10) in freie Enden der Rohrelemente eingeklebte Anschlußzapfen (11) aufweisen, an deren zylindrischen Außenflächen keilförmige Taschen (20) zur Aufnahme von Klebstoff angeordnet sind und die Rohrelemente und Verbindungsformteile aus einem thermoplastischem Kunststoff wie Polyetheretherketon bestehen.

2. Führungsgestell nach Anspruch 1, dadurch **gekennzeichnet**, daß jede Taschen (20) aus einer Ebene (E1) und einer Ebene (E2) gebildet ist, die einen Öffnungswinkel (ú) miteinander bilden.

3. Führungsgestell nach Anspruch 1 oder 2, dadurch **gekennzeichnet**, daß die dem freien Ende des Anschlußzapfens (11) zugewandte Ebene (E1) annähernd senkrecht auf der Achse des Anschlußzapfens (11) steht.

4. Führungsgestell nach einem der Ansprüche 1 bis 3, dadurch **gekennzeichnet**, daß der öffnungswinkel (µ) 60° beträgt.

## Claims

1. Routing rack (1) for electrical wiring for aircraft, comprising individual tubes connected at predetermined points to one another, free ends of the tubes being connectable to the structure of the aircraft and the routing rack (1) comprising tubular elements and shaped connection pieces (8, 9, 10) for fastening to the structure of the aircraft or for fastening tubular elements to one another, characterized in that the shaped connection pieces (8, 9, 10) have connection pins (11), which are glued into free ends of the tubular elements and on whose cylindrical outer surfaces wedge-shaped recesses (20) are disposed for receiving adhesive, and the tubular elements and shaped connection pieces are made of a thermoplastic material such as polyetheretherketone.

2. Routing rack according to claim 1, characterized in that each recess (20) is formed by a plane (E1) and a plane (E2), which together form an aperture angle (µ).

3. Routing rack according to claim 1 or 2, characterized in that the plane (E1) nearer the free end of the connection pin (11) lies approximately at right angles to the axis of the connection pin (11).

4. Routing rack according to one of claims 1 to 3, characterized in that the aperture angle (µ) is 60°.

## Revendications

1. Support de guidage (1) pour conducteurs électriques dans les avions, composé de différents conduits reliés les uns aux autres à des endroits prédéterminés, les extrémités libres desdits conduits pouvant être connectées à la structure de l'avion et le support de guidage (1) étant constitué d'éléments tubulaires et de pièces usinées de liaison (8, 9, 10) destinés à sa fixation à la structure de l'avion ou à la fixation des éléments tubulaires entre eux, **caractérisé en ce que** les pièces usinées de liaison (8, 9, 10) présentent des cylindres de raccordement (11) collés dans les extrémités libres des éléments tubulaires et sur les surfaces cylindriques externes desquels sont disposées des poches en forme de coin destinées à la réception de colle et en ce que les éléments tubulaires et les pièces usinées de liaison sont constituées en une matière thermoplastique telle que le polyétheréther-cétone.

2. Support de guidage selon la revendication 1, caractérisé en ce que chacune des poches (20) est formée d'un plan (E1) et d'un plan (E2) qui forment ensemble un angle d'ouverture (µ).

3. support de guidage selon l'une ou l'autre des revendications 1 et 2, caractérisé en ce que le plan (E1) tourné vers l'extrémité libre du cylindre de raccordement (11) est disposé plus ou moins perpendiculairement sur l'axe du cylindre de raccordement (11).

4. Support de guidage selon l'une ou l'autre des revendications 1 à 3, caractérisé en ce que l'angle d'ouverture (µ) atteint 60°.
